# EUROPEAN PATENT APPLICATION

(11) **EP 1 964 729 A2**
(43) Date of publication of application: **03.09.2008**
(21) Application number: 08001062.2
(22) Date of filing: 21.01.2008
(51) Int. Cl.: B60R 22/34

(54) **Seat belt retractor and seat belt apparatus employing the same**

(30) Priority: 28.02.2007 JP 2007049801
(71) Applicant: TAKATA CORPORATION, Minato-ku, Tokyo 106-8510 (JP)
(72) Inventor: Yoshioka, Hirokazu, Tokyo 106-8510 (JP); Fukuoka, Yasunori, Tokyo 106-8510 (JP)
(74) Representative: Banzer, Hans-Jörg

(57) **Abstract**

In order to make a mechanism for preventing the end lock in a compact size while achieving the effective prevention of the end lock due to a belt withdrawal sensor (11), as the carrier (34) is rotated by the rotation of a spool (9) via a torsion bar (13), a state that a planetary gear (35) only revolves and a state that the planetary gear (35) revolves and also rotates are alternately repeated. In the state that the planetary gear (35) only revolves, a cam plate (33) which controls the pivotal movement of an oscillation preventive member (23) for the belt withdrawal sensor (11) does not rotate relative to a lock gear (27). In the state that the planetary gear (35) revolves and also rotates, the cam plate (33) rotates relative to the lock gear (27) because the rotation speed is increased. The cam plate (33) intermittently rotates relative to the lock gear (27) during the rotation of the spool (9) to reduce the amount of relative rotation of the cam plate (33) and thus shortening a cam groove of the cam plate (33).

## Description

### Technical Field of the Invention

The present invention relates to a technical field of a seat belt apparatus which is installed in a vehicle such as an automobile and restrains an occupant by means of a seat belt withdrawn from a seat belt retractor. More particularly, the present invention relates to a technical field of a seat belt retractor which comprises at least a belt withdrawal sensor (seat belt sensor) for preventing a seat belt from being withdrawn when the seat belt is rapidly withdrawn and is capable of preventing an end lock which likely occurs due to the oscillation of the belt withdrawal sensor at the completion of the seat belt winding operation, and to the seat belt apparatus employing the seat belt retractor.

### Related Art

Conventionally, a seat belt apparatus attached to a vehicle seat of a vehicle such as an automobile is generally provided for restraining an occupant by means of a seat belt in the event of an emergency such as a vehicle collision, thereby preventing the occupant from jumping out of the vehicle seat.

Such a seat belt apparatus is generally provided with a seat belt retractor. Most of the conventional seat belt retractors are provided with a belt withdrawal sensor which oscillates according to rapid withdrawal of the seat belt so as to prevent the withdrawal of the seat belt. The belt withdrawal sensor may invite a phenomenon, so-called end lock, making the normal withdrawn of the seat belt difficult if the belt withdrawal sensor oscillates when the withdrawn seat belt is maximally wound.

There is proposed a seat belt retractor capable of preventing the end lock due to the belt withdrawal sensor (for example, see JP-A-09-58410).

The seat belt retractor disclosed in JP-A-09-58410 comprises a cam plate which rotates according to the rotation of the spool for winding the seat belt. The cam plate is provided with a helical long cam groove formed therein. The seat belt retractor is further provided with an oscillation preventive member for preventing the oscillation of the belt withdrawal sensor. The oscillation preventive member is arranged in such a manner that the oscillation preventive member is pivotally movable between an oscillation allowing position for allowing the oscillation of the belt withdrawal sensor and an oscillation preventing position for preventing the oscillation of the belt withdrawal sensor. The pivotal movement of the oscillation preventive member is controlled by a cam follower of the oscillation preventive member which is guided along the cam groove of the cam plate.

In this case, the pivotal movement of the oscillation preventive member is controlled such that the oscillation preventive member is pivotally moved toward the oscillation allowing position because of the rotation of the cam plate in the belt withdrawing direction by the withdrawal of the maximally wound seat belt, while the oscillation preventive member is pivotally moved toward the oscillation preventing position because of the rotation of the cam plate in the belt winding direction by the winding of the withdrawn seat belt. When the withdrawn seat belt is maximally wound, the oscillation preventive member is set to the oscillation preventing position so that the belt withdrawal sensor is not allowed to oscillate, thereby preventing the end lock. When the maximally wound seat belt is withdrawn by a predetermined amount, the oscillation preventive member is set to the oscillation allowing position so that the belt withdrawal sensor is allowed to oscillate to exhibit its function of preventing the withdrawal of the seat belt when the seat belt is rapidly withdrawn.

### Problems to be solved by the Invention

By the way, in the seat belt retractor disclosed in JP-A-09-58410, the oscillation preventive member is always rotated while the spool is rotated for withdrawing and winding the seat belt. In addition, the amount of rotation of the oscillation preventive member between the oscillation allowing position and the oscillation preventing position is small relative to the amount of rotation of the spool which is relatively large. Accordingly, the cam groove should be long. To form the long cam groove, the number of the helical circles of the cam groove is required to be increased.

However, to increase the number of the helical circles of the cam groove, the outer diameter of the cam plate is consequently increased in order to ensure the space for formation of the cam groove. This leads to increase in size of the seat belt retractor.

On the other hand, nowadays a wide variety of layouts of seat belt apparatuses installed in vehicles are provided because of diversification of vehicles. In this case, the combination between the range of forming the cam groove in the cam plate and the range of rotation of the oscillation preventive member generally depends on the layout of the seat belt. Therefore, a large number of combinations between the range of forming the cam groove in the cam plate and the range of rotation of the oscillation preventive member are required. However, if the seat belt has a large size because of a large cam plate, it is difficult to effectively respond to demand of a wide variety of combinations.

The present invention was made under the aforementioned circumstances and an object of the present invention is to provide a seat belt retractor in which the end lock due to a belt withdrawal sensor can be effectively prevented and a structure for preventing the end lock can be made in a compact size and to provide a seat belt apparatus employing the seat belt retractor.

### Means to solve the Problems

According to the invention, this object is achieved by a seat belt retractor as defined in claim 1 and a seat belt apparatus as defined in claim 5. The dependent claims define preferred and advantageous embodiments of the invention.

To solve the aforementioned problems, a seat belt retractor according to the invention comprises: a spool onto which a seat belt is wound; a locking mechanism which allows the rotation of said spool when it is inoperative and prevents the rotation of said spool in the belt withdrawing direction when it is operative; a belt withdrawal sensor which is actuated when said seat belt is rapidly withdrawn at a speed exceeding a predetermined speed higher than the speed for normal operation; and a lock actuating means which actuates said locking mechanism according to the actuation of said belt withdrawal sensor, wherein said lock actuating means comprises at least a lock gear which is disposed such that said lock gear rotates together with said spool when it is inoperative and said lock gear rotates relative to said spool when it is operative and actuates said locking mechanism by relative rotation of said lock gear relative to said spool when it is operative, wherein said belt withdrawal sensor is disposed on said lock gear such that said belt withdrawal sensor can oscillate between an inoperative position where the lock gear is allowed to rotate both in the belt winding direction and the belt withdrawing direction and an operative position where the lock gear is prevented from rotating at least in the belt withdrawing direction, wherein said lock gear is provided with an oscillation preventive member for preventing the oscillation of said belt withdrawal sensor such that said oscillation preventive member moves between an oscillation preventing position where said belt withdrawal sensor is held at said inoperative position to prevent the oscillation of said belt withdrawal sensor at least when said seat belt is maximally wound and an oscillation allowing position where the oscillation of said belt withdrawal sensor is allowed when said seat belt is withdrawn by a predetermined amount or more and is also provided with an oscillation preventive member control means for controlling the movement of said oscillation preventive member, and wherein said oscillation preventive member control means comprises a movement control member which rotates according to the rotation of said spool to control the movement of said oscillation preventive member and an intermittent relative rotation means which makes said movement control member to intermittently rotate relative to said lock gear.

According to the embodiment of the invention, said movement control member is a cam plate which has a cam groove and wherein said oscillation preventive member is provided with a cam follower which is inserted into and guided by said cam groove.

According to another embodiment of the invention, said intermittent relative rotation means comprises a carrier which rotates together with said spool, a planetary gear which is rotatably supported by said carrier, an internal gear which is disposed on said cam plate and with which said planetary gear is meshed, and a planetary gear control means which alternately and repeatedly sets said planetary gear to a state that said planetary gear only revolves and to a state that said planetary gear revolves and also rotates on its axis.

According to still another embodiment of the invention, the seat belt retractor further comprises a vehicle sensor which normally allows the rotation of said lock gear and prevents the rotation of said lock gear in the belt withdrawing direction in the event of an emergency when a deceleration larger than the normal one acts on a vehicle, wherein a stopper is provided in such a manner that said stopper is movable in the radial direction of said lock gear between the engagement preventing position where said vehicle sensor allows the rotation of said lock gear and an engagement allowing position where said vehicle sensor is able to prevent the rotation of said lock gear in the belt winding direction, and wherein at least when said seat belt is maximally wound onto said spool, said stopper is set to said engagement preventing position.

A seat belt apparatus according to the invention comprises at least: a seat belt to be worn by an occupant; a seat belt retractor which wind up said seat belt while allowing the withdrawal of said seat belt and is actuated in the event of an emergency to prevent the withdrawal of said seat belt; a tongue slidably supported by said seat belt withdrawn from said seat belt retractor; and a buckle which is attached to a vehicle body or a vehicle seat and to which said tongue can be detachably latched, wherein said seat belt retractor is the seat belt retractor mentioned above.

### Effects of the Invention

According to the seat belt retractor of the present invention, since the oscillation preventive member is set to the oscillation preventing position by the movement control member when the seat belt is maximally wound, the oscillation of the belt withdrawal sensor is prevented by the oscillation preventive member so that the belt withdrawal sensor is held at the inoperative position. Therefore, the end lock due to the belt withdrawal sensor can be prevented.

Since the movement control member performs the intermittent relative rotation relative to the lock gear by the intermittent relative rotation means during the rotation of the spool, the rotational amount of the movement control member until the seat belt is wound onto the spool maximally is reduced. Accordingly, the movement control member for controlling the movement of the oscillation preventive member between the oscillation preventing position and the oscillation allowing position can be formed to have a simple structure. Therefore, the movement control member is made in a compact size. In a case that the movement control member is composed of a cam plate having a cam groove, the length of the cam groove is shortened and the cam plate has a simple structure, thereby further effectively making the movement control member into a compact size.

According to the rotation of the spool, since the stopper is movable in the radial direction between the engagement preventing position where the vehicle sensor allows the rotation of the lock gear and the engagement allowing position where the vehicle sensor can prevent the rotation of the lock gear in the belt withdrawing direction, the stopper can be set to the engagement preventing position when the seat belt is wound onto the spool maximally. Therefore, the end lock due to the vehicle sensor can be prevented. In this manner, both the end lock due to the belt withdrawal sensor and the end lock due to the vehicle sensor can be prevented, thereby more effectively preventing the end lock which likely occurs when the seat belt is maximally wound.

On the other hand, according to a seat belt apparatus of the present invention, the end lock in the seat belt retractor can be effectively prevented, thereby improving the operability of the seat belt and enabling the smooth and stable wearing of the seat belt by the occupant.

### Brief Explanation of the drawings

Fig. 1 is an illustration schematically showing a seat belt apparatus comprising a seat belt retractor as an embodiment according to the present invention.

Fig. 2 is a sectional view showing the seat belt retractor of the embodiment.

Fig. 3 is a sectional view taken along a line III-III in Fig. 2.

Fig. 4 is a sectional view taken along a line IV-IV in Fig. 2.

Figs. 5(a)-5(c) show a com plate of a first end lock preventive device of the embodiment, wherein Fig. 5(a) is a left side view thereof, Fig. 5(b) is a front view thereof, and Fig. 5(c) is a right side view thereof.

Figs. 6(a)-6(c) show a carrier of the first end lock preventive device of the embodiment, wherein Fig. 6(a) is a left side view thereof, Fig. 6(b) is a front view thereof, and Fig. 6(c) is a right side view thereof.

Figs. 7(a)-7(c) show a planetary gear of the first end lock preventive device of the embodiment, wherein Fig. 7(a) is a left side view thereof, Fig. 7(b) is a front view thereof, and Fig. 7(c) is a right side view thereof.

Fig. 8 is an illustration showing a sub assembly in which the cam plate, the carrier, and the planetary gear are assembled to be united.

Fig. 9 is an exploded perspective view of a second end lock preventive device as seen from one direction.

Fig. 10 is an exploded perspective view of the second end lock preventive device as seen from the opposite direction from the direction of Fig. 9.

Fig. 11 is a right side view of the seat belt retractor shown in Fig. 2.

Fig. 12 is a perspective view showing a stopper control disk of the second end lock preventive device.

Figs. 13(a), 13(b) show a part of the behavior of the first end lock preventive device, wherein Fig. 13(a) is an illustration for explaining the behavior of the planetary gear and Fig. 13(b) is an illustration for explaining the behavior of the oscillation preventive member.

Figs. 14(a), 14(b) show another part of the behavior of the first end lock preventive device, wherein Fig. 14(a) is an illustration for explaining the behavior of the planetary gear and Fig. 14(b) is an illustration for explaining the behavior of the oscillation preventive member.

Figs. 15(a), 15(b) show still another part of the behavior of the first end lock preventive device, wherein Fig. 15(a) is an illustration for explaining the behavior of the planetary gear and Fig. 15(b) is an illustration for explaining the behavior of the oscillation preventive member.

Figs. 16(a), 16(b) show still another part of the behavior of the first end lock preventive device, wherein Fig. 16(a) is an illustration for explaining the behavior of the planetary gear and Fig. 16(b) is an illustration for explaining the behavior of the oscillation preventive member.

Figs. 17(a), 17(b) show still another part of the behavior of the first end lock preventive device, wherein Fig. 17(a) is an illustration for explaining the behavior of the planetary gear and Fig. 17(b) is an illustration for explaining the behavior of the oscillation preventive member.

Figs. 18(a), 18(b) show still another part of the behavior of the first end lock preventive device, wherein Fig. 18(a) is an illustration for explaining the behavior of the planetary gear and Fig. 18(b) is an illustration for explaining the behavior of the oscillation preventive member.

Figs. 19(a), 19(b) show still another part of the behavior of the first end lock preventive device, wherein Fig. 19(a) is an illustration for explaining the behavior of the planetary gear and Fig. 19(b) is an illustration for explaining the behavior of the oscillation preventive member.

### Best Modes for carrying out the Invention

Hereinafter, best modes for carrying out the present invention will be described with reference to the attached drawings.

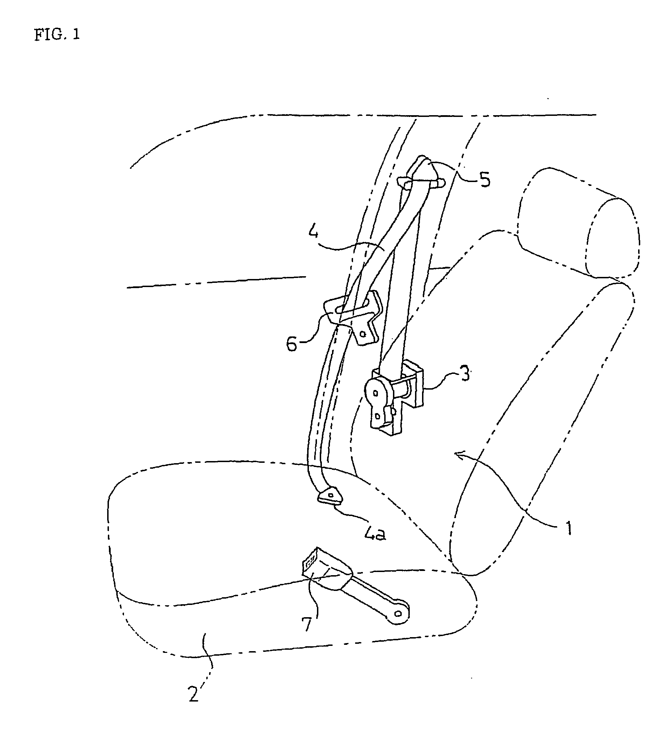

Fig. 1 is an illustration schematically showing a seat belt apparatus comprising a seat belt retractor as an embodiment according to the present invention.

As shown in Fig. 1, the seat belt apparatus 1 of this embodiment comprises, similarly to a conventionally known seat belt apparatus of a three-point type using a seat belt retractor, a seat belt retractor 3 which is fixed to a vehicle body near a vehicle seat 2, a seat belt 4 which is withdrawn from the seat belt retractor 3 and is provided at its end with a belt anchor 4a fixed to a vehicle floor or the vehicle seat 2, a deflection fitting 5 for guiding the seat belt 4 withdrawn from the seat belt retractor 3 toward an occupant's shoulder, a tongue 6 which is slidably supported by the seat belt 4 guided by and extending from the deflection fitting 5, and a buckle 7 which is fixed to the vehicle floor or the vehicle seat 2 and to which the tongue 6 can be inserted and latched.

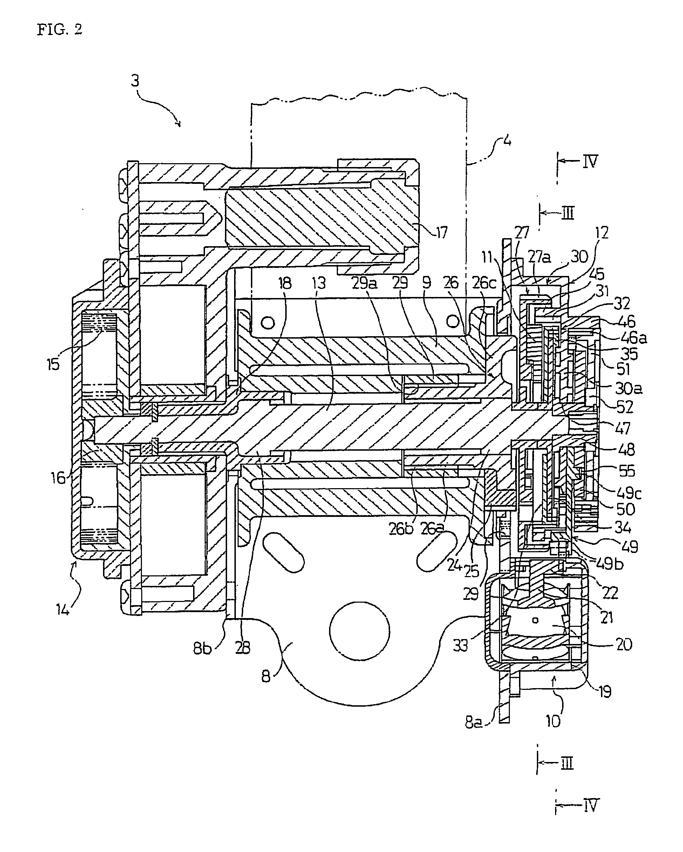

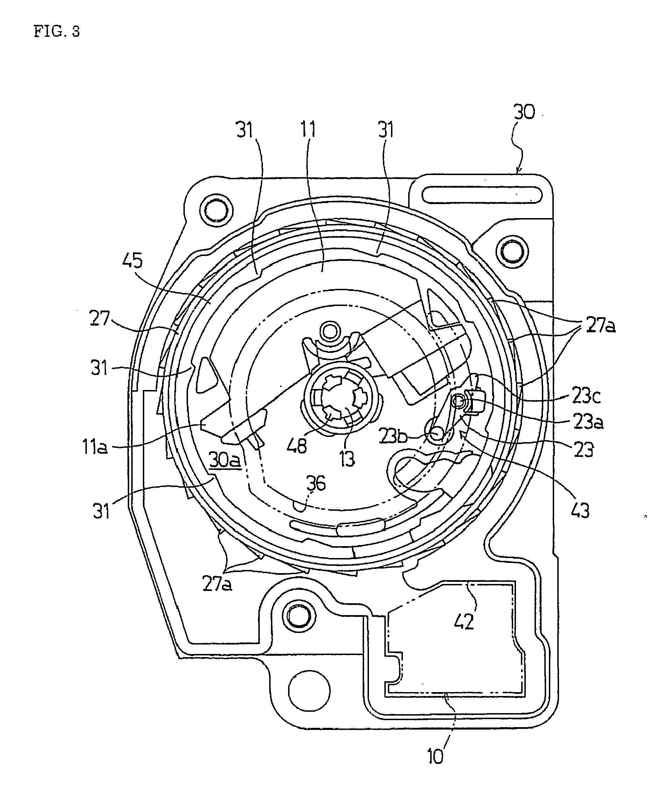

The seat belt retractor 3 of this embodiment will be described. Fig. 2 is a sectional view for schematically illustrating the seat belt retractor of this embodiment and Fig. 3 is a sectional view taken along a line III-III of Fig. 2.

First, conventionally known components of the seat belt retractor 3 will be briefly described. In Fig. 2 and Fig. 3, numeral 3 designates the seat belt retractor, 4 designates the seat belt, 8 designates a U-shaped frame, 9 designates a spool which is supported by side walls 8a, 8b of the frame 8 for winding up the seat belt 4, 10 designates a vehicle sensor as a deceleration sensing means which senses a large vehicle deceleration generated in the event of an emergency as mentioned above and is thus actuated, 11 designates a belt withdrawal sensor which is actuated when the seat belt 4 is rapidly withdrawn at a predetermined withdrawal speed which is higher than normal withdrawal speed or higher, 12 designates a locking mechanism which is actuated by the vehicle sensor 10 or the belt withdrawal sensor 11 to block at least the rotation of the spool 9 in the belt withdrawing direction, 13 designates a torsion bar which is fitted in the center of the spool 9 with some looseness to extend in the axial direction and rotationally connects the spool 9 and the locking mechanism 12, 14 designates a spring means which always biases the spool 9 in the belt winding direction via a bush 16 by spring force of a spiral spring 15, 17 designates a pretensioner which is actuated in the event of an emergency as mentioned above to generate belt winding torque, and 18 designates a bush for transmitting the belt winding torque of the pretensioner 17 to the spool 9.

The vehicle sensor 10 comprises a casing 19 which is received and fixed in a receiving portion 42 of a retainer 30 fixed to the side wall 8a of the frame 8, an inertial ball 20 which is accommodated in the casing 19 and inertially moves in the event of an emergency as mentioned above, an actuator 21 which is activated when the inertial ball 20 inertially moves, and an engaging pawl 22 formed at an end of the actuator 21.

The belt withdrawal sensor 11 is composed of an inertial mass and has an engaging pawl 11a. The belt withdrawal sensor 11 is oscillatably supported by a locking gear 27, as will be described later, for actuating the locking mechanism 12. In this case, the belt withdrawal sensor 11 is adapted to oscillate between an inoperative position (position shown in Fig. 3) where its engaging pawl 11a is not engaged with ratchet teeth 31 as annular internal gear of the retainer 30 fixed to the side wall 8a of the frame 8 and an operative position (not shown) where the engaging pawll1a is engaged with one of the ratchet teeth 31. The ratchet teeth 31 are formed in the inner periphery of an annular projecting portion 45 projecting in the axial direction from a side wall 30a of the retainer 30 toward the spool 9.

The locking mechanism 12 comprises a locking base 26 which is supported by a first torque transmitting shaft 24 of the torsion bar 13 in such a manner that the locking base 26 is rotatable together with the first torque transmitting shaft 24 and holds a pawl 25 to allow the pivotal movement of the pawl 25. When the locking mechanism 12 is actuated, the pawl 25 of the locking base 26 is engaged with one of internal teeth 29 of the side wall 8a of the frame 8 so as to lock the rotation of the spool 9 in the belt withdrawing direction.

The locking mechanism 12 is controlled by a lock gear 27 supported by the torsion bar 13. That is, the lock gear 27 composes a lock actuating means of the present invention. The lock gear 27 normally rotates together with the torsion bar 13. The rotation of lock gear 27 is stopped by the actuation of the vehicle sensor 10 in the event of an emergency as mentioned above or by the actuation of the belt withdrawal sensor 11 when the seat belt 4 is suddenly withdrawn as mentioned above.

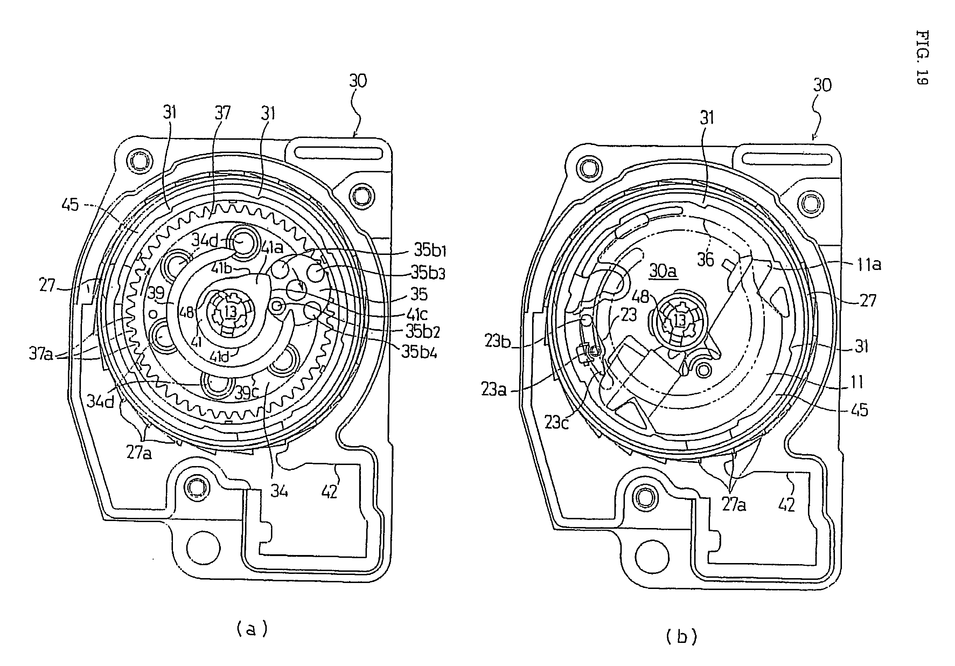

The lock gear 27 is provided with a first end lock preventive device 43 for preventing the end lock due to the belt withdrawal sensor 11. The first end lock preventive device 43 has an oscillation preventive member 23 having a lever-like shape. The oscillation preventive member 23 is supported by the lock gear 27 such that the oscillation preventive member 23 is pivotable about a rotary shaft 23a. The oscillation preventive member 23 comprises a pin-like cam follower 23b and a stopper 23c on the opposite side of the cam follower 23b relative to the rotary shaft 23a. The oscillation preventive member 23 is adapted to pivotally move between an oscillation allowing position (shown in the drawing) where the oscillation of the belt withdrawal sensor 11 is allowed and an oscillation preventing position (shown in Fig. 19 as described later) where the oscillation of the belt withdrawal sensor 11 is prevented.

The torsion bar 13 is rotationally connected to the spool 9 via its second torque transmitting portion 28 and the bush 18. Then, the second torque transmitting portion 28 of the torsion bar 13 and the bush 18 are not allowed to rotate relative to the spool 9, that is, the second torque transmitting portion 28 and the bush 18 rotate together with the spool 9 both in the belt winding direction and the belt withdrawing direction.

Disposed between the spool 9 and the shaft 26a of the locking base 26 is an annular relative rotation locking member 29. The relative rotation locking member 29 is provided with an internal thread 29a formed in its inner periphery and is screwed onto an external thread 26b formed in the shaft portion 26a of the locking base 26 and is fitted in an axial hole of the spool 9 such that the relative rotation locking member 29 is not allowed to rotate relative to the spool 9 and is allowed to move in the axial direction. As the spool 9 rotates in the belt withdrawing direction relative to the locking base 26, the relative rotation locking member 29 rotates together with the spool 9 so as to move toward the right in Fig. 2.

By the spring force of the spring 15 of the spring means 14, the spool 9 is always biased in the belt winding direction via the bush 16, the torsion bar 13, the second torque transmitting portion 28 of the torsion bar 13, and the bush 18. When the pretensioner 17 is actuated, the belt winding torque generated by the pretensioner 17 is transmitted to the spool 9 through the bush 18, whereby the spool 9 winds up a predetermined amount of the seat belt 4. In the normal state where the pretensioner 17 is not actuated, the bush 18 and the torsion bar 13 can freely rotate both in the belt winding direction and the belt withdrawal direction relative to the pretensioner 17.

With the conventionally known structural components as mentioned above of the seat belt retractor 3 of this embodiment, the maximum amount of the seat belt 4 (the amount of the seat belt which can be wound maximally by the normal winding action with the spring means 14 when the seat belt is not worn) is wound up by the biasing force of the spring means 14 when the seat belt 4 is not worn. In this state, the oscillation preventive member 23 is set at the oscillation preventing position. Therefore, the belt withdrawal sensor 11 is held at its inoperative position (shown in Fig. 19 as will be descried later. It should be noted that the seat belt sensor 11 is also positioned at its inoperative position shown in Fig. 3). When the belt withdrawal sensor 11 is at its inoperative position, the engaging pawl 11a is not engaged with the ratchet teeth 31 of the retainer 30 fixed to the side wall 8a of the frame 8.

As the seat belt 4 is withdrawn at normal speed for wearing the seat belt, the spool 9 rotates in the belt withdrawing direction to allow the seat belt 4 to be smoothly withdrawn. By the rotation of the spool 9 in the belt withdrawing direction, the oscillation preventive member 23 starts to pivotally move toward the oscillation allowing position. After the seat belt 4 is withdrawn by a predetermined amount necessary for wearing the seat belt 4, the tongue 6 is inserted into and latched with the buckle 7. After that, an excessively withdrawn part of the seat belt 4 is wound onto the spool 9 by the biasing force of the spring means 14, whereby the seat belt 4 fits the occupant without giving undesired oppression on the occupant. Accordingly, in the state where the seat belt 4 is worn, the oscillation preventive member 23 is at its oscillation allowing position as shown in Fig. 3. Therefore, the belt withdrawn sensor 11 freely oscillates so that the engaging pawl 11a can be engaged with one of the ratchet teeth 31.

As the tongue 6 is released from the buckle 7 for cancelling the wearing of the seat belt, the spool 9 is rotated in the belt winding direction by the biasing force of the spring means 14 so as to wind up the seat belt 4 onto the spool 9. By the rotation of the spool 9 in the belt winding direction, the oscillation preventive member 23 starts to pivotally move toward the oscillation preventing position. As the maximum amount of the seat belt 4 is wound up, the rotation of the spool 9 is stopped so as to complete the belt winding. In the state where the maximum amount of the seat belt 4 is wound up and the rotation of the spool 9 is stopped, the oscillation preventive member 23 is set to the oscillation preventing position so that the belt withdrawal sensor 11 is not allowed to oscillate at the inoperative position shown in Fig. 3. By the way, since the present invention has a characteristic in the structure for controlling the pivotal movement of the oscillation preventive member 23, the description about this will be described in more detail in description about the structure of the characterizing portion of the present invention later.

In the event of an emergency as mentioned above when the seat belt is worn, the pretensioner 17 is actuated and the seat belt winding torque generated by the pretensioner 17 is transmitted to the spool 9 so as to wind up a predetermined amount of the seat belt 4 onto the spool 9, thereby quickly restraining the occupant. On the other hand, the vehicle sensor 10 is actuated by a large vehicle deceleration generated in the event of an emergency so as to activate the locking mechanism 12. That is, as the inertial ball 20 of the vehicle sensor 10 inertially moves in the event of an emergency so as to activate the actuator 21, whereby the engaging pawl 22 at its tip end is engaged with one of the ratchet teeth 27a of the lock gear 27. Then, the rotation of the lock gear 27 in the belt withdrawing direction is prevented so that the locking base 26 rotates relative to the lock gear 27 so as to pivotally move the pawl 25 of the locking mechanism 12. By this pivotal movement, the pawl 25 is engaged with one of the internal teeth 29 of the side wall 8a of the frame 8. Then, the rotation of the locking base 26 in the belt withdrawing direction is prevented, whereby the torsion bar 13 is twisted and only the spool 9 rotates in the belt withdrawing direction relative to the locking base 26. After that, the spool 9 rotates in the belt withdrawing direction with twisting the torsion bar 13. Because of the twisting torque of the torsion bar 13, the impact energy on the occupant is absorbed and reduced, thereby limiting the load applied to the seat belt 4.

By the way, the relative rotation of the spool 9 in the belt withdrawing direction relative to the locking base 26 moves the relative rotation locking member 29 to the right in the axial direction in Fig. 2. As the relative rotation locking member 29 moves to the end of the external thread 26b of the locking base 26, the axial rightward movement is stopped so that the rotation is locked, thereby preventing the relative rotation locking member 29 from rotating relative to the locking base 26 (it should be noted that the axial rightward movement of the relative rotation locking member 29 may be stopped by contact of the relative rotation locking member 29 to a side wall of a flange-like portion 26c of the locking base 26). Therefore, the rotation of the spool 9 relative to the locking base 26 is also stopped. That is, the rotation of the spool 9 in the belt withdrawing direction is locked to as to prevent the seat belt 4 from being withdrawn, whereby the inertial movement of the occupant in the event of an emergency is blocked by the seat belt 4.

In the seat belt retractor 3, also when the seat belt is worn and the seat belt 4 is withdrawn at more rapid speed than the speed for normal operation, the rotation of the spool 9 in the withdrawing direction is prevented by the locking mechanism 12. That is, since the lock gear 27 is rapidly rotated because of the rapid withdrawal of the seat belt 4, the belt withdrawal sensor 11 oscillates relative to the lock gear 27 because of inertial delay. The oscillation of the belt withdrawal sensor 11 engages its engaging pawl 11 a with one of the ratchet teeth 31 of the retainer 30. Therefore, the rotation of the lock gear 27 in the belt withdrawing direction is prevented. After this, similarly to the case of operation of the vehicle sensor 10 as mentioned above, the pawl 25 is engaged with one of internal teeth 29 of the frame 8 so as to lock the rotation of the spool 9 in the belt withdrawing direction. The seat belt 4 is prevented from being further withdrawn.

Since details of the conventionally known structural components of the seat belt retractor 3 and the operation thereof should be usually understood in the light of the aforementioned JP-A-09-58410 (except the torsion bar and its operation) and JP-A-2004-314744, the description of the details will be omitted.

Then, the structure of the characterizing portion of the seat belt retractor 3 of this embodiment of the present invention will be described.

The characterizing portion of the seat belt retractor 3 of this embodiment comprises, as different parts from the seat belt retractor disclosed in JP-A-09-58410, a new portion of the first end lock preventive device 43 for preventing the end lock due to the belt withdrawal sensor 11 and a second end lock preventive device 44 for preventing the end lock due to the vehicle sensor 10.

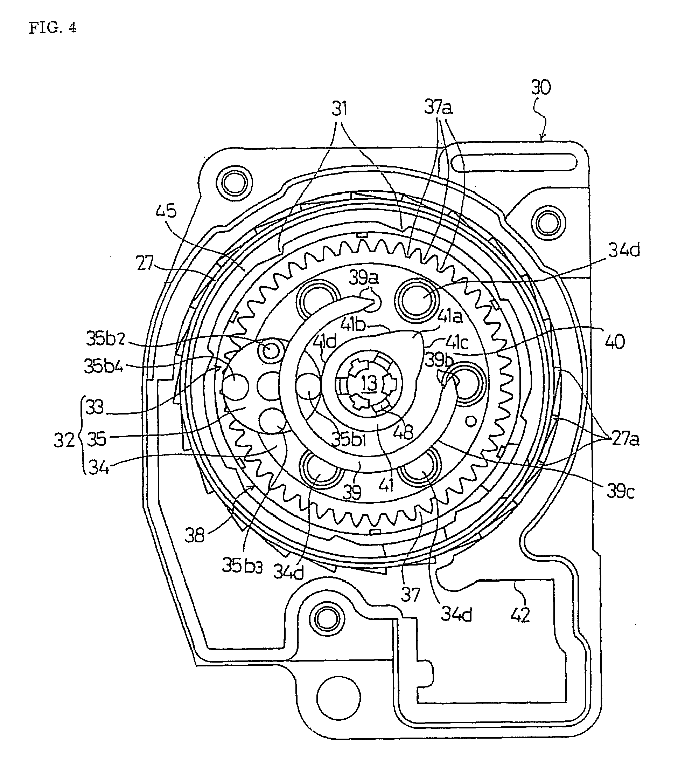

Fig. 4 is a sectional view taken along a line IV-IV of Fig. 2 for explaining the first end lock preventive device 43 of this embodiment.

As shown in Fig. 4, the first end lock preventive device 43 of this embodiment comprises, in addition to the aforementioned oscillation preventive member 23, an oscillation preventive member control means (hereinafter, referred to as "O.P.M. control means") 32 for controlling the pivotal movement of the oscillation preventive member 23. The O.P.M. control means 32 is positioned adjacent to the belt withdrawal sensor 11. The O.P.M. control means 32 comprises a cam plate 33 (corresponding to the movement control member of the present invention), a carrier 34, and a planetary gear 35.

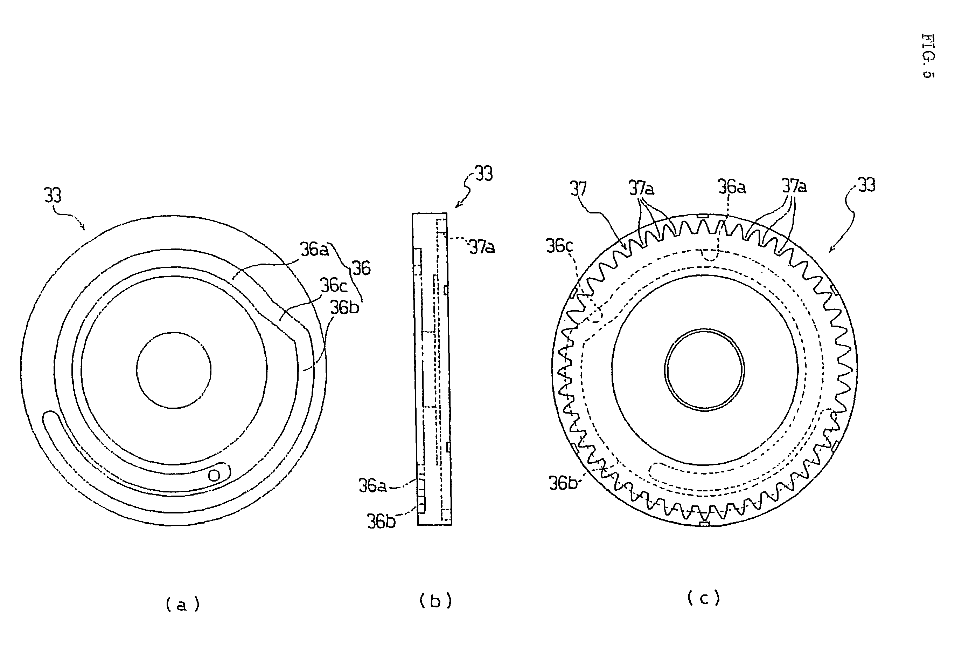

As shown in Figs. 5(a) through 5(c), the cam plate 33 is formed into a disk shape and is provided with an irregular helical cam groove 36 formed in one surface of the cam plate 33. The cam groove 36 is a groove for controlling the pivotal movement of the oscillation preventive member 23. The cam groove 36 comprises a small-diameter groove 36a, a large-diameter groove 36b, and a switching groove 36c for switching the small-diameter groove 36a and the large-diameter groove 36b. The small-diameter groove 36a is formed coaxially with the cam plate 33 to have an arc corresponding to about a three-quarter of a circle (an arc corresponding to about 270° of a circle). The large-diameter groove 36b is formed coaxially with the cam plate 33 similarly to the small-diameter groove 36a to have an arc corresponding to about a half of a circle ( an arc corresponding to about 180° of a circle) which is a larger than the circle of the small-diameter groove 36a. Further, the switching groove 36c is formed to be a linear groove connecting the small- and large-diameter grooves 36a, 36b. In this case, the respective connecting ends of the small- and large-diameter grooves 36a, 36b are shifted by 20° in the rotational direction so that the switching groove 36c is inclined relative to the radial direction.

The cam plate 33 is provided on its other surface with an internal gear 37 having a predetermined number of internal teeth 37a which are aligned in an annular shape coaxially with the cam plate 33. The internal gear 37 is arranged along the periphery of the cam plate 33.

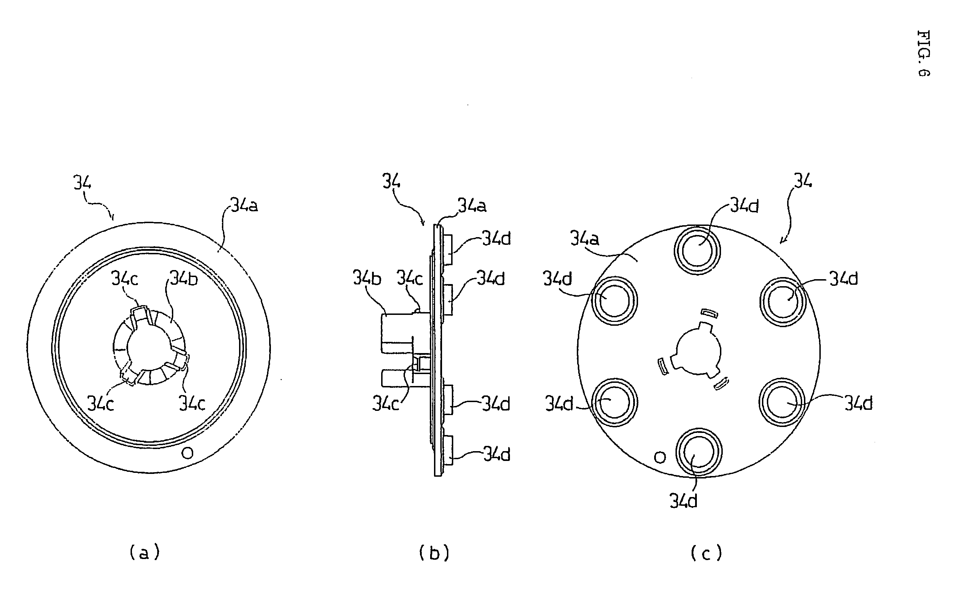

As shown in Figs. 6(a) through 6(c), the carrier 34 comprises a disk-like portion 34a and a cylindrical shaft 34b projecting in the axial direction from the center of one surface of the disk-like portion 34a. The shaft 34b is provided with a predetermined number of (three in the illustrated example) engaging claws 34c which are spaced at equal intervals in the circumferential direction. Disposed on the other surface of the disk-like portion 34a are a predetermined number of (six in the illustrated example) cylindrical support columns 34d which project from an outer edge portion of the disk-like portion 34a in the axial direction and are spaced at equal intervals in the circumferential direction. The shaft 34b of the carrier 34 is attached to the torsion bar 13 such that the shaft 34b rotates together with the torsion bar 13.

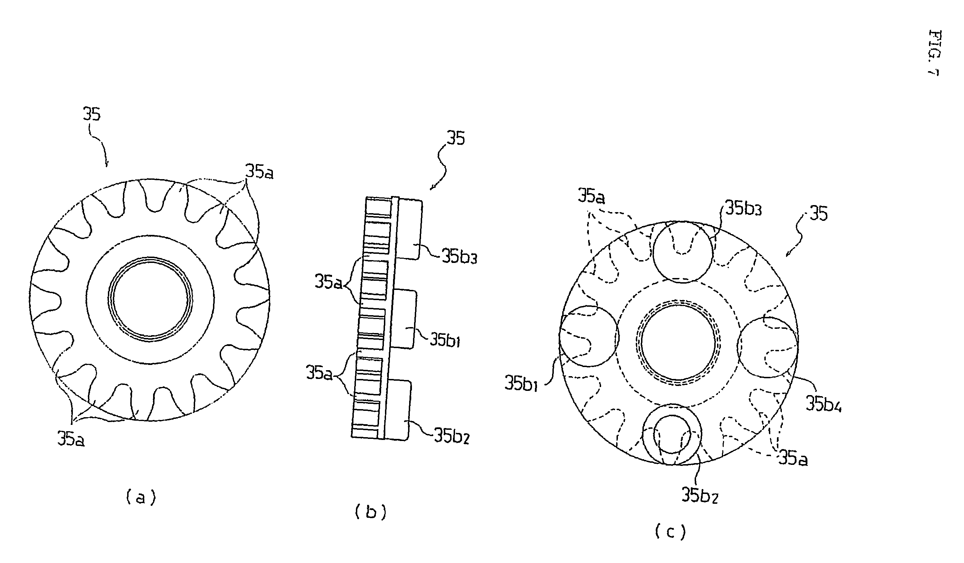

As shown in Figs. 7(a) through 7(c), the planetary gear 35 is formed in a disk shape and is provided at its one surface with a predetermined number of external teeth 35a. Disposed on the other surface of the planetary gear 35 are four cylindrical guide columns 35b which project from an outer edge portion of the planetary gear 35 in the axial direction and are spaced at equal intervals in the circumferential direction.

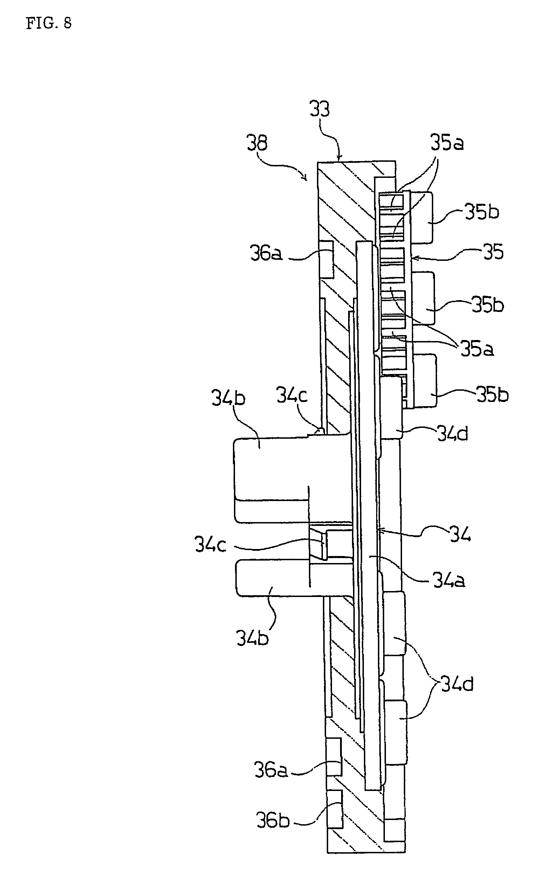

As shown in Fig. 8, the com plate 33, the carrier 34, and the planetary gear 35 are previously assembled to compose a sub assembly 38 before assembling the retractor. That is, the center hole of the cam plate 33 is rotatably fitted onto the shaft 34b of the carrier 34 so that the cam plate 33 is positioned in the axial direction between the disk-like portion 34a and the engaging claws 34c of the carrier 34. In this case, the cam plate 33 is fitted onto the shaft 34b in such a manner that the cam groove 36 faces to the belt withdrawal sensor 11.

Therefore, the cam groove 36 and the internal gear 37 of the cam plate 33 are positioned in the radial direction relative to the shaft 34b of the carrier 34 (i.e. the torsion bar 13). The internal gear 37 is positioned also in the radial direction relative to the support columns 34d of the carrier 34. Further, the planetary gear 35 is rotatably supported by one of the support columns 34d of the carrier 34. In this case, since the internal gear 37 is positioned in the radial direction relative to the supporting shaft 34d of the carrier 34, the planetary gear 35 is precisely positioned relative to the internal gear 37 so that the external teeth 35a of the planetary gear 35 precisely mesh with the internal teeth 37a of the internal gear 37.

When the sub assembly 38 structured as mentioned above is attached to the torsion bar 13 as shown in Fig. 2, the cam follower 23b of the oscillation preventive member 23 is inserted and fitted in the cam groove 36 of the cam plate 33. The cam follower 23b is guided by the cam groove 36, whereby the pivotal movement of the oscillation preventive member 23 is controlled between the oscillation allowing position and the oscillation preventing position. The guiding control for the cam follower 23b by the cam groove 36 is conducted by the rotation of the cam plate 33 relative to the lock gear 27.

When the cam follower 23b is located in the small-diameter groove 36a of the cam groove 36, the oscillation preventive member 23 is set to the oscillation allowing position where the belt withdrawal sensor 11 can freely oscillate. The cam follower 23b and the cam groove 36 are designed such that the cam follower 23b is located at a position spaced apart from the inner end of the cam groove 36 by a predetermined distance, that is, a predetermined position apart from the end of the small-diameter groove 36a of the cam groove 36, when the seat belt 4 is in a state maximally withdrawn.

When the cam follower 23b is located in the large-diameter groove 36b of the cam groove 36, the oscillation preventive member 23 is set to the oscillation preventing position where the belt withdrawal sensor 11 is not allowed to oscillate. The cam follower 23b and the cam groove 36 are designed such that the cam follower 23b is located at a position spaced apart from the outer end of the cam groove 36 by a predetermined distance, that is, at a predetermined position spaced apart from the end of the large-diameter groove 36b of the cam groove 36, when the seat belt 4 is in a state maximally wound.

When the cam follower 23b is located in the switching groove 36c of the cam groove 36, the cam follower 23b is adapted to be switched from either the small-diameter groove 36a or large-diameter groove 36b to the other groove. The switching of the position of the cam follower 23b in the cam groove 36 switches the oscillation preventive member 23 from either the oscillation allowing position or the oscillation preventing position to the other position.

As shown in Fig. 4, the retainer 30 comprises a first guide rail 39 which is an arcuate ridge formed coaxially with the torsion bar 13 and a second guide rail 41 which is an annular ridge formed coaxially with the torsion bar 13 and of which outer diameter is smaller than the inner diameter of the first guide rail 39.

The first guide rail 39 extends about 270° in the circumferential direction so as to have a non-formed portion 40 extending about 90° in the circumferential direction. The first guide rail 39 is provided at its both ends with tapering faces 39a, 39b continuously tapering toward the respective tips.

On the outer surface of the second guide rail 41 facing the non-formed portion 40 of the first guide rail 39, a projecting guide portion 41a projecting toward the non-formed portion 40 is formed. The projecting guide portion 41a is formed substantially in a triangle and has curved faces 41b, 41c as slightly bulging sides of the triangle.

When the guide column 35b₁ as one of the guide columns 35b of the planetary gear 35 is positioned between the first and second guide rails 39, 41 and before the guide column 35b₁ reaches one of the curved faces 41 b, 41 c of the second guide rail 41 according to the revolving direction of the planetary gear 35, the guide column 35b₁ is guided by the second guide rail 41. At this point, the other two guide columns 35b₂, 35b₃ adjacent to the guide column 35b₁ on its both sides are both guided by the outer surface 39c of the first guide rail 39 or only one of the guide columns 35b₃, 35b₂ which is on the downstream side in the revolving direction of the planetary gear 35 is guided by the outer surface 39c of the first guide rail 39. In this state, the planetary gear 35 is prevented from rotating on its axis and is only allowed to revolve integrally with the carrier 34. In this state, the internal gear 37, i.e. the cam plate 33, also rotates together with the rotation of the carrier 34 and the revolution of the planetary gear 35. In other words, the lock gear 27 and the cam plate 33 rotate together without relative rotation.

After the guide column 35b₁ of the planetary gear 35 reaches one of the curved faces 41b, 41c of the second guide rail 41, the guide column 35b₁ is guided by the one of the curved faces 41b, 41c, one of the other guide columns 35b₃, 35b₂ which have been guided by the first guide rail 39 is no longer guided by the first guide rail 39 so that the planetary gear 35 is allow to rotate on its axis. That is, the planetary gear 35 is allowed to revolve and also to rotate on its axis. As the planetary gear 35 rotates on its axis, the internal gear 37, i.e. the cam plate 33, rotates at a relatively higher speed relative to the carrier 34, i.e. the torsion bar 13, and the lock gear 27.

Then, the second end lock preventive device 44 will be described.

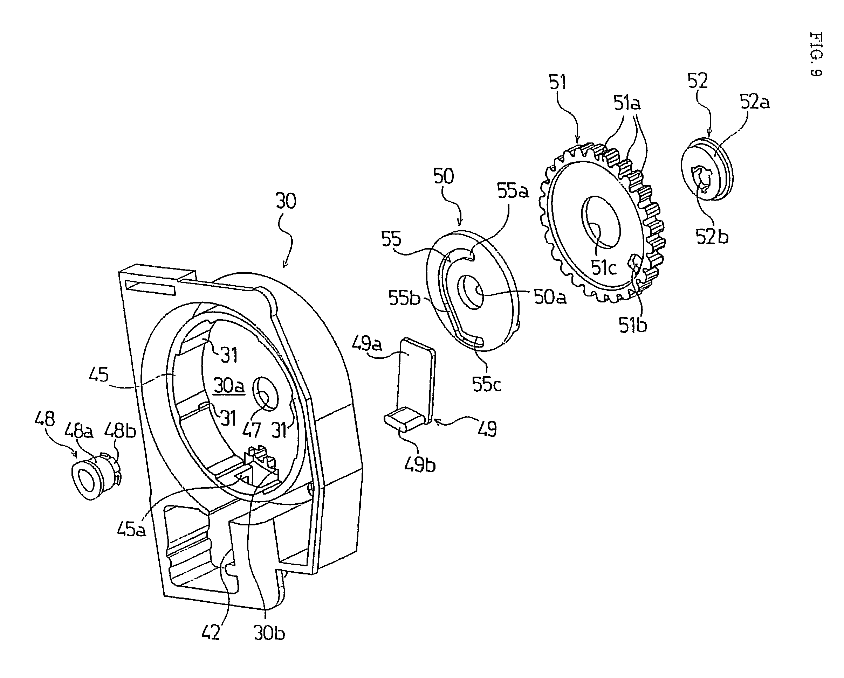

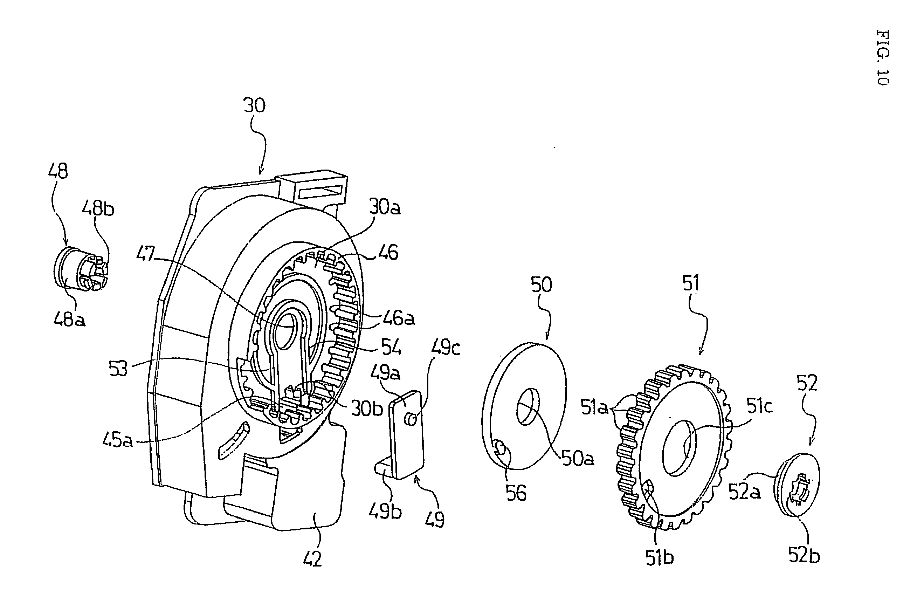

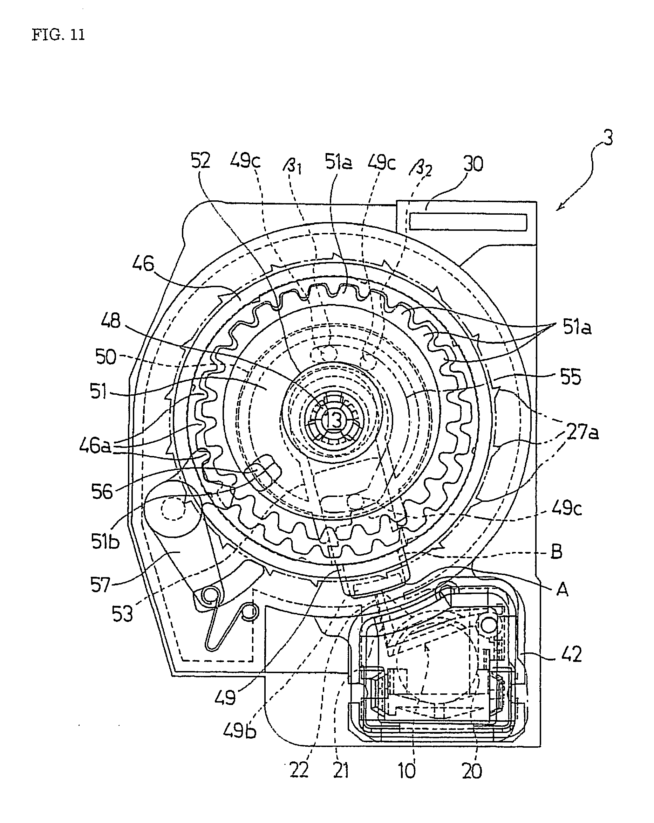

Fig. 9 is an exploded perspective view showing the second end lock preventive device 44, Fig. 10 is an exploded perspective view showing the second end lock preventive device 44 as seen from the opposite direction from the direction of Fig. 9, and Fig. 11 is a side view of the second end lock preventive device 44.

As shown in Fig. 2 and Fig. 10, on the side of the side wall 30a of the retainer 30 opposite the spool 9 side (the right side in Fig. 10), the ring gear 46 having internal teeth 46a projects in the axial direction. The ring gear 46 is disposed coaxially with the spool 9 and the annular projecting portion 45.

Further, a through hole 47 is formed in the side wall 30a of the retainer 30 inside the annular projecting portion 45 and the ring gear 46 and coaxially with the annular projecting portion 45 and the ring gear 46. The bush 48 which is fitted to the torsion bar 13 such that the bush 48 rotates together with the torsion bar 13 is inserted into the through hole 47.

As shown in Fig. 2, Fig. 9 through Fig. 11, on the side of the side wall 30a of the retainer 30 opposite the spool side, a stopper 49, a stopper control disk 50, a control ring 51, and an eccentric disk 52 are arranged in the axial direction in this order from the retainer 30 side.

The stopper 49 comprises a supporting guide portion 49a and an arcuate stopper portion 49b which is supported by the supporting guide portion 49a and extends perpendicularly to the supporting guide portion 49a. Formed on the supporting guide portion 49a is a pin-like cam follower 49c. Formed on the side of the side wall 30a of the retainer 30 opposite the spool 9 side are a pair of guide rails 53, 54 extending in the radial direction of the ring gear 46 which are spaced from each other by a predetermined distance. The supporting guide portion 49a is disposed between the guide rails 53, 54 such that the supporting guide portion 49a is slidable in the radial direction of the ring gear 46 relative to the side wall 30a while being guided by the guide rails 53, 54. That is, the stopper 49 is movable in the radial direction of the spool 9 and the lock gear 27.

The side wall 30a is provided with an opening 30b passing therethrough in the axial direction and the annular projecting portion 45 is provided with an opening 45a which is formed at a position corresponding to the opening 30b to pass therethrough from the inside to the outside of the annular projecting portion 45. The stopper portion 49b is inserted through the opening 30b to enter the annular projecting portion 45 and can project outside the annular projecting portion 45 as shown in Fig. 2 and Fig. 11.

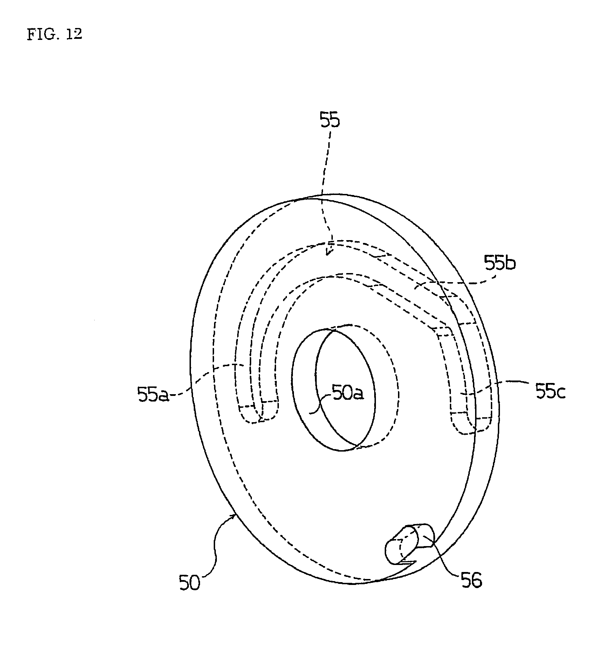

As shown in Fig. 2, Fig. 9 and Fig. 12, the stopper control disk 50 has a cam groove 55 which is formed in a surface facing the stopper 49. The cam groove 55 comprises an arcuate retraction groove portion 55a extending along a part of a circle which is coaxial with the stopper control disk 50 and has a relatively small diameter, a linear groove portion 55b extending tangentially from the arcuate retraction groove portion 55a, and an arcuate protraction groove portion 55c extending from a contact with the linear groove portion 55b along a part of a circle which is coaxial with the stopper control disk 50 and has a diameter larger than the diameter of the circle of the arcuate retraction groove portion 55a. Further, a circular through hole 50a is formed in the central portion of the stopper control disk 50 and is coaxial with the stopper control disk 50. The circular through hole 50a is rotatably supported by a supporting portion 48a of the bush 48.

Further, an arcuate connecting projection 56 is formed on the surface of the stopper control disk 50 on the side opposite the side where the cam groove 55 is formed.

The control ring 51 has external teeth 51a which mesh with the internal teeth 46a of the ring gear 46 and an arcuate connecting hole 51b. By inserting the connecting projection 56 of the stopper control disk 50 into the connecting hole 51b, the control ring 51 and the stopper control disk 50 are connected in the rotational direction. In this case, the control ring 51 eccentrically rotates relative to the torsion bar 13 (i.e. the spool 9), while the stopper control disk 50 coaxially rotates relative to the torsion bar 13 as will be described later. For this, the connecting projection 56 of the stopper control disk 50 is adapted to be slidable in the radial direction relative to the connecting hole 51b. Formed in the central portion of the control ring 51 is a circulate through hole 51 c which is coaxial with the control ring 51.

The eccentric disk 52 is formed to have a circular supporting surface 52a around the outer periphery thereof. The eccentric disk 52 has a connecting hole 52b which is formed at a position eccentric from the center of the supporting surface 52a. The through hole 51c of the control ring 51 is fitted onto and supported all around its surface by the supporting surface 52a in such a manner that the control ring 51 and the supporting surface 52a are slidable relative to each other. The connecting portion 48b of the bush 48 is fitted into and connected to the connecting hole 52b in such a manner that the bush 48 and the eccentric disk 52 can not rotate relative to each other. Therefore, the eccentric disk 52 is rotated by the rotation of the spool and the control ring 51 is eccentrically rotated by the rotation of the eccentric disk 52. In addition, the stopper control disk 50 is rotated by the eccentric rotation of the control ring 51 and the stopper 49 is moved in the radial direction of the lock gear 27 by the rotation of the stopper control disk 50.

When the cam follower 49c of the stopper 49 is located in the arcuate retraction groove portion 55a of the cam groove 55 of the stopper control disk 50, the seat belt 4 is withdrawn by an amount exceeding a predetermined withdrawing amount for the normal belt wearing. The arcuate retraction groove portion 55a is set to have a predetermined length in the arcuate direction, whereby the cam follower 49c is located in the arcuate retraction groove portion 55a before the maximum amount of the seat belt 4 is withdrawn. Therefore, when the maximum amount or substantially the maximum amount of the seat belt 4 is withdrawn from the spool 9 biased by the spring means 14, the cam follower 49c is positioned in the arcuate retraction groove portion 55a.

When the cam follower 49c of the stopper 49 is located in the linear groove portion 55b of the cam groove 55, the seat belt 4 is withdrawn by an amount corresponding to the predetermined amount for the normal belt wearing.

When the cam follower 49c of the stopper 49 is located in the arcuate protraction groove portion 55c of the cam groove 55 of the stopper control disk 50, the maximum amount of the seat belt 4 is wound. The arcuate protraction groove portion 55c is set to have a predetermined length in the arcuate direction, whereby the cam follower 49c is located in the arcuate protraction groove portion 55c even when the seat belt 4 is not maximally wound for some reason so that the winding is completed in a state that the winding amount is slightly smaller than the normal winding amount. Therefore, when the maximum amount or substantially the maximum amount of the seat belt 4 is wound onto the spool 9 biased by the spring means 14, the cam follower 49c is located in the arcuate protraction groove portion 55c of the cam groove 55.

In the seat belt retractor 3 of this embodiment, the second end lock preventive device 44 is composed of the stopper 49, the control disk 50, and the control ring 51.

Hereinafter, the respective actions of the first and second end lock preventive devices 43, 44 will be described.

### State that the seat belt is maximally withdrawn

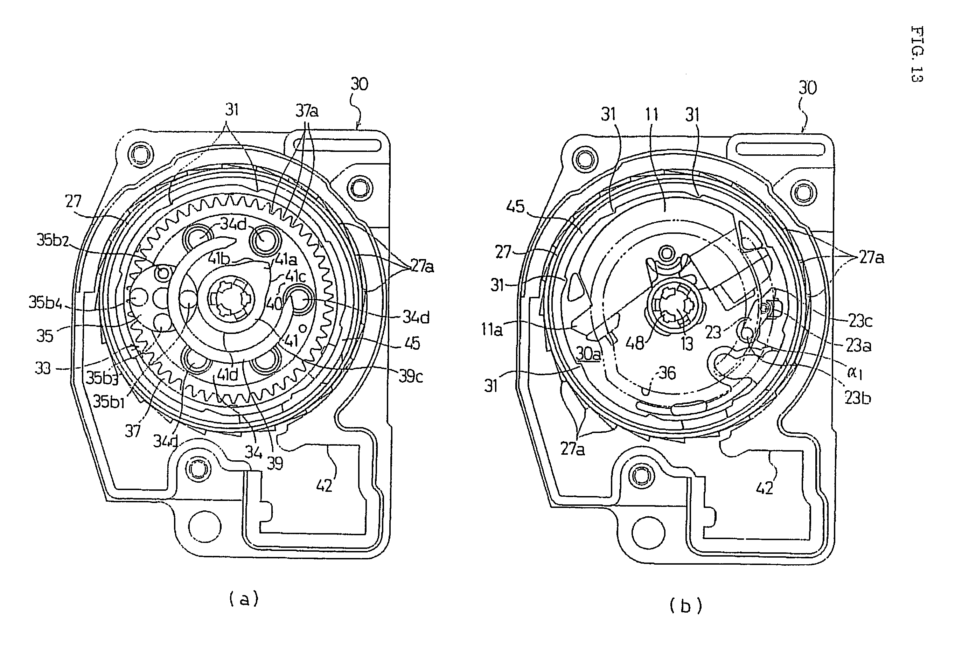

In the state that the seat belt 4 is maximally withdrawn, as shown in Fig. 13(a), the planetary gear 35 of the first end lock preventive device 43 is located on the way of the first guide rail 39. In this state, the guide column 35b₁ as one of the guide columns 35b of the planetary gear 35 is in contact with the outer surface 41d of the second guide rail 41 and is guided by the outer surface 41d. In addition, the two guide columns 35b₂, 35b₃ adjacent to the guide column 35b₁ are in contact with the outer surface 39c of the first guide rail 39 and are guided by the outer surface 39c. In this state, the planetary gear 35 is not allowed to rotate on its axis.

At this point, as shown in Fig. 13(b), the cam follower 23b of the oscillation preventive member 23 is located at a predetermined position α₁ in the small-diameter groove 36a of the cam groove 36 of the cam plate 33. In this state, the oscillation preventive member 23 is set to the oscillation allowing position so that the belt withdrawal sensor 11 is allowed to oscillate.

On the other hand, the cam follower 49c of the stopper 49 in the second end lock preventive device 44 is located at a predetermined position β₁ in the arcuate retraction groove portion 55a of the cam groove 55 as shown in Fig. 11. In this state, the stopper 49 is pulled and is thus set to the engagement allowing position so that the vehicle sensor 10 is allowed to operate.

### State that the seat belt is worn by occupant

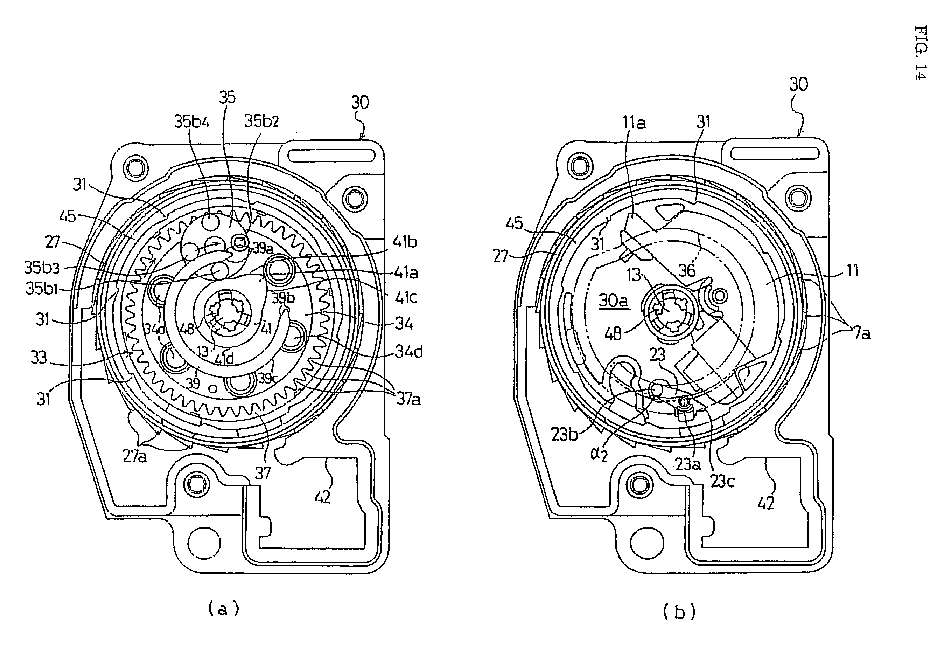

In the state that the seat belt 4 is worn by the occupant, as shown in Fig. 14(a), the planetary gear 35 is still located on the way of the first guide rail 39. In this state, the guide column 35b, as one of the guide columns 35b of the planetary gear 35 is still guided by the outer surface 41d of the arcuate portion of the second guide rail 41 similarly to the state that the seat belt is maximally withdrawn. Though the guide column 35b₂ as another one of the guide columns is out of the first guide rail 39 and is located at a position facing the non-formed portion 40, the other guide column 35b₃ is still guided by the outer surface 39c of the first guide rail 39. Also in this state, the planetary gear 35 is not allowed to rotate on its axis.

At this point, the cam follower 23b of the oscillation preventive member 23 is still located in the small-diameter groove 23a of the cam groove 36 as shown in Fig. 14(b). However, a predetermined position α₂ where the cam follower 23b is located in this case is nearer to the switching groove 36c than the predetermined position α₁ for the state that the seat belt 4 is maximally withdrawn. Also in this state, the oscillation preventive member 23 is set to the oscillation allowing position so that the belt withdrawal sensor 11 is allowed to oscillate. Therefore, in the state that the seat belt 4 is worn by the occupant, the belt withdrawal sensor 11 is allowed to operate.

It should be noted that, in the state that the seat belt 4 is worn by the occupant, the planetary gear 35 may be located at a position where the two guide column 35b₂, 35b₃ are both guided by the outer surface 39c of the first guide rail 39 and where is nearer to one end of the first guide rail 39 than the position for the state that the seat belt 4 is maximally withdrawn.

On the other hand, in the second end lock preventive device 44, the cam follower 49c of the stopper 49 is still located in the arcuate retraction groove portion 55a of the cam groove 55 as shown in Fig. 11. However, a predetermined position β₂ where the cam follower 49c is located in this case is nearer to the linear groove portion 55b of the cam groove 55 than the predetermined position β₁ for the state that the seat belt 4 is maximally withdrawn. It should be noted that the cam follower 49c may be located in the linear groove portion 55b of the cam groove 55. In this case, the stopper portion 49b of the stopper 49 is further pulled to an inner-side position B inside the root of the ratchet teeth 27a of the lock gear 27 as shown by dotted lines in Fig. 11.

In this state, when the actuator 21 of the vehicle sensor 10 is actuated so that the engaging pawl 22 at its tip end moves toward the ratchet gear 27a, the engaging pawl 22 does not come in contact with the stopper portion 49b and is thus allowed to move to a position where the engaging pawl 22 can be engaged with the ratchet teeth 27a of the lock gear 27. That is, the engaging pawl 22 of the actuator 21 can be engaged with the ratchet teeth 27a of the lock gear 27, thereby exhibiting the function as an emergency locking retractor (ELR). Therefore, the inner-side position B of the stopper portion 49b is an engagement allowing position where the engaging pawl 22 of the vehicle sensor 10 is allowed to be engaged with the ratchet teeth 27a of the lock gear 27.

### State that the seat belt is wound by cancelling the wearing to occupant

In the state that the seat belt 4 is wound by cancelling the wearing of the seat belt 4 to the occupant (by releasing the tongue 6 from the buckle 7), the torsion bar 13 is rotated in the belt winding direction (in the clockwise direction in Fig. 3) by the biasing force of the spring means 14 so that the spool 9 is also rotated in the belt winding direction. Accordingly, the withdrawn seat belt 4 is wound onto the spool 9. The rotation of the torsion bar 13 in the belt winding direction rotates the carrier 34 in the same direction (the clockwise direction in Fig. 14(a)). At this point, since the planetary gear 35 revolves in the same direction together with the carrier 34 without rotating on its axis, the internal gear 37 (i.e. the cam plate 33) also rotates together with the carrier 34 and the planetary gear 35. Accordingly, the cam plate 33 does not rotate relative to the lock gear 27 and the cam plate 33 and the lock gear 27 rotate together at the same speed. Thus, the cam follower 23b is held at the present position in the small-diameter groove 36a of the cam groove 36. Therefore, the oscillation preventive member 23 is held at the oscillation allowing position so that the belt withdrawal sensor 11 is allowed to oscillate.

The guide column 35b₃ which has been guided by the first guide rail 39 becomes out of the first guide rail 39 and the guide column 35b₁ which has been guided by the second guide rail 41 comes in contact with the slant face 41 b as one of the slant faces of the projecting guide portion 41a. Accordingly, the planetary gear 35 is allowed to rotate on its axis.

By further rotation of the carrier 34 in the same direction, the planetary gear 35 further revolves. At this point, the guide column 35b₁ receives resistance to the revolution by the projecting guide portion 41a so that the planetary gear 35 rotates on its axis in the clockwise direction. By this rotation of the planetary gear 35, the rotational speed of the internal gear 37, i.e. the cam plate 33, is increased so that the internal gear 37 rotates in the clockwise direction relative to the lock gear 27. Then, the cam follower 23b in the small-diameter groove 36a moves toward the switching groove 36c. However, since the cam follower 23b is still located in the small-diameter groove 36a, the oscillation preventive member 23 is still set at the oscillation allowing position so that the belt withdrawal sensor 11 is allowed to oscillate.

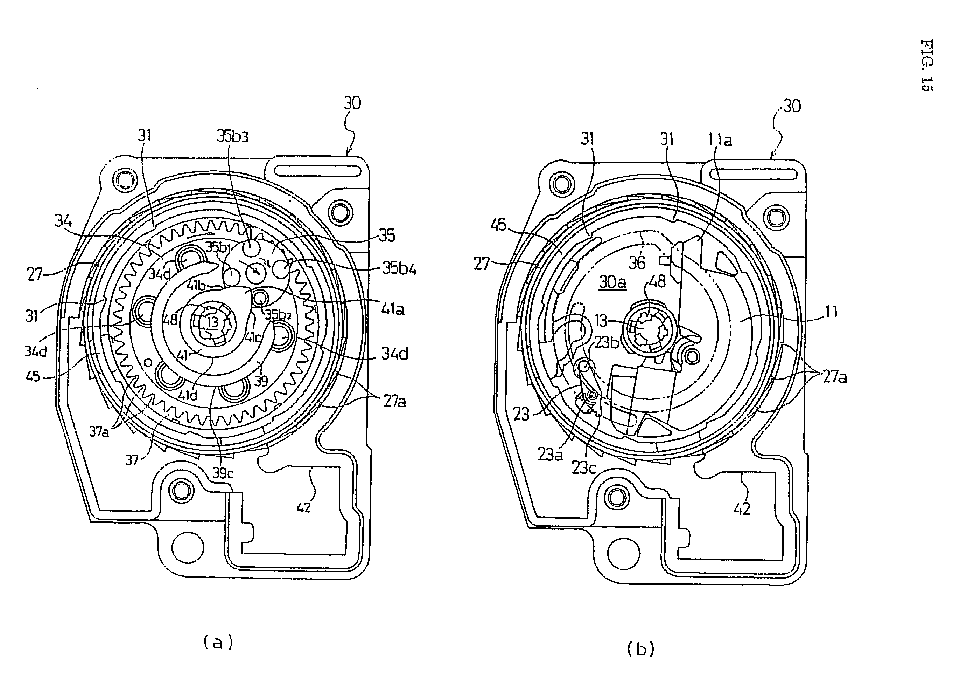

As shown in Fig. 15(a), by further revolution and further rotation of the planetary gear 35, the guide column 35b₂ adjacent to the guide column 35b₁ being in contact with the slant face 41 b comes in contact with the other slant face 41 c of the projecting guide portion 41a. That is, the guide columns 35b₁, 35b₂ are in contact with the slant faces 41 b, 41 c of the projecting guide portion 41 a, respectively.

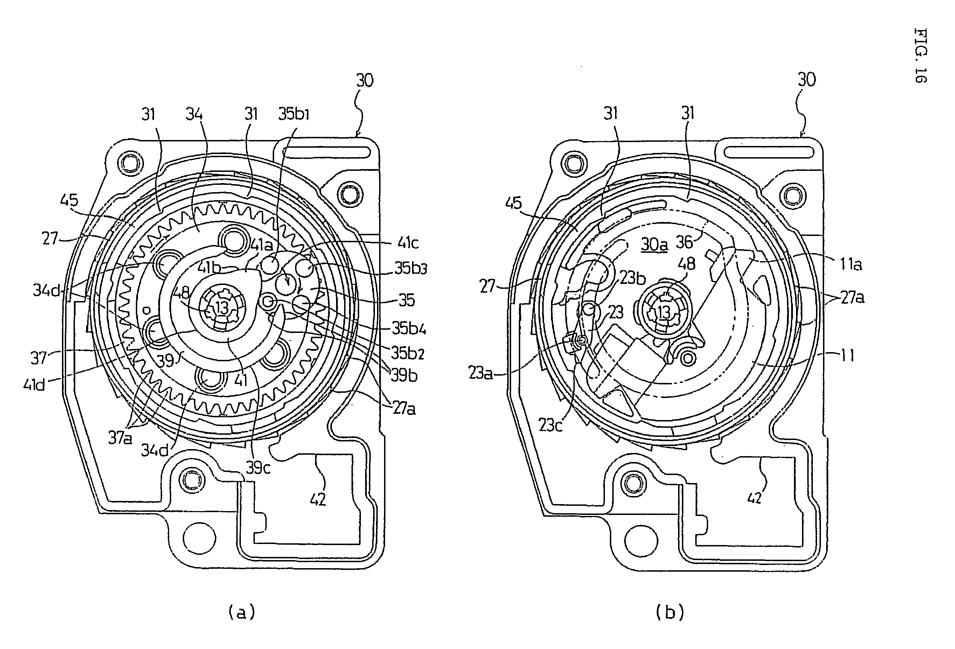

By further revolution and further rotation of the planetary gear 35, the guide column 35b₁ separates from the slant face 41b while the guide column 35b₂ is guided by the slant face 41c of the projecting guide portion 41 a as shown in Fig. 16(a). Since, during this, the cam plate 33 further rotates in the clockwise direction relative to the lock gear 27, the cam follower 23b being located in the small-diameter groove 36a further moves toward the switching groove 36c as shown in Fig. 16(b).

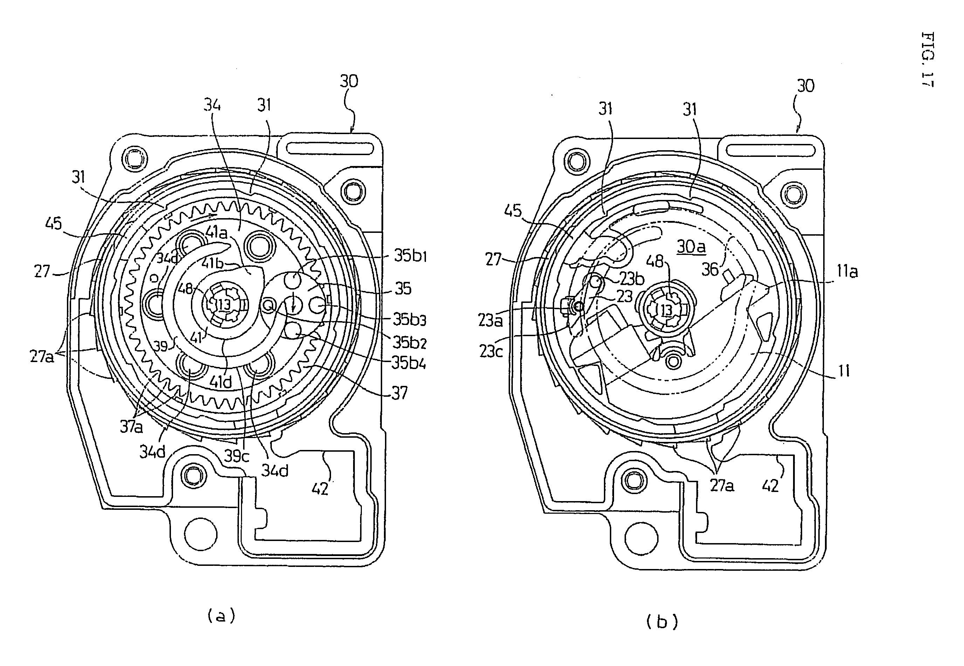

By further revolution and further rotation of the planetary gear 35, the guide column 35b₂ becomes located at a boundary between the slant face 41c of the projecting guide portion 41a and the outer surface of the arcuate portion of the second guide rail 41 as shown in Fig. 17(a). At this point, the guide column 35b₄ next to the guide column 35b₂ comes in contact with the outer surface 39c of the first guide rail 39. Accordingly, the planetary gear 35 is not allowed to rotate on its axis. Since the end of the first guide rail 39 has tapered faces 39b, the two guide columns 35b₄, 35b₂ are smoothly guided to the outer surfaces 39c, 41d of the first and second guide rails 39, 41, respectively. During this, the cam follower 23b being located in the small-diameter groove 36a further moves toward the switching groove 36c as shown in Fig. 17(b). Since the cam follower 23b is still located in the small-diameter groove 36a, however, the oscillation preventive member 23 is still set at the oscillation allowing position so that the belt withdrawal sensor 11 is allowed to oscillate.

In this manner, the rotation of the planetary gear 35 on its axis is terminated so that the planetary gear 35 is allowed only to revolve according to further rotation of the carrier 34. Then, the rotation with the increased speed of the cam plate 33 is finished so that the cam plate 33 rotates together with the lock gear 27 at the same speed and does not rotate relative to the lock gear 27. Therefore, the cam follower 23b being located in the small-diameter groove 36a does not move relative to the small-diameter groove 36a so as to hold its present position. Since the cam follower 23b is still located in the small-diameter groove 36a, the oscillation preventive member 23 is still set at the oscillation allowing position so that the belt withdrawal sensor 11 is allowed to oscillate.

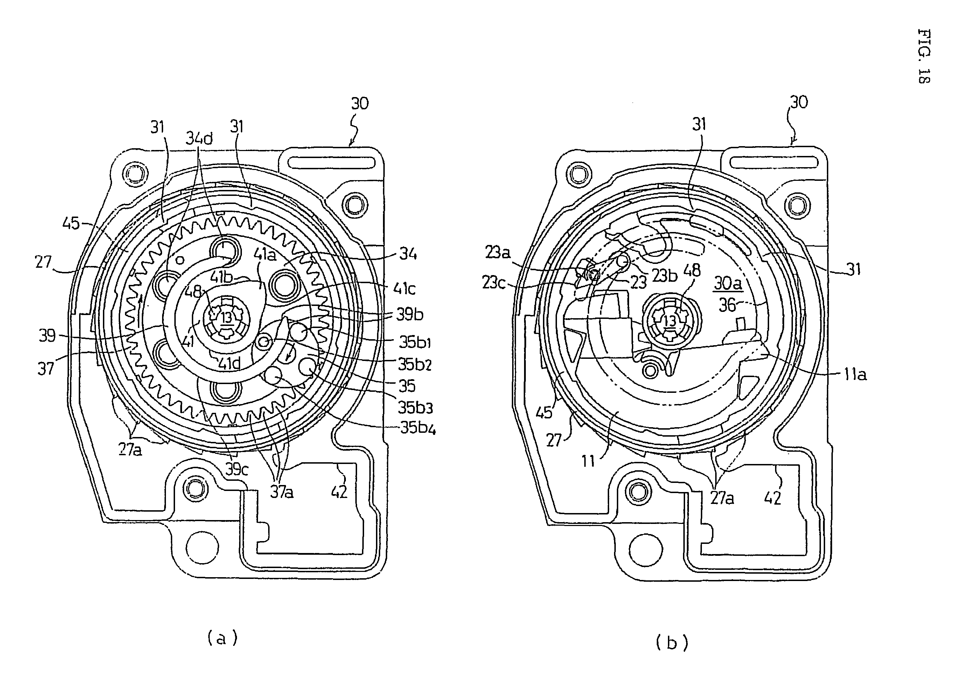

By further revolution of the planetary gear 35, the guide column 35b₂ is guided by the outer surface 41d of the second guide rail 41 and the guide column 35b₁ next to the guide column 35b₂ also comes in contact with the outer surface 39c of the first guide rail 39 as shown in Fig. 18(a). During this, the cam follower 23b is held at its present position relative to the small-diameter groove 36a as shown in Fig. 18(b).

By further revolution of the planetary gear 35, the planetary gear 35 substantially becomes to the state shown in Fig. 13(a) and Fig. 14(a). Therefore, during the rotation of the spool 9, the cam plate 33 is alternately and repeatedly set to a state not rotating relative to the lock gear 27 and to a state rotating relative to the lock gear 27. That is, the internal gear 37, the carrier 34, the planetary gear 35, and the first and second guide rails 39, 41 compose an intermittent relative rotation means of the present invention. In this case, the guide columns 35b₁, 35b₂, 35b₃, 35b₄ of the planetary gear 35, the outer surface 39c of the first guide rail 39, the non-formed portion 40 of the first guide rail 39, the outer surface 41d of the second guide rail 41, and the slant faces 41 b, 41 c of the projecting guide portion 41 a of the second guide rail 41 compose a planetary gear control means of the present invention.

In this manner, the rotation of the cam plate 33 relative to the lock gear 27 exists not always and is thus an intermittent relative rotation. Therefore, the rotational amount of the cam plate 33 relative to the lock gear 27 is reduced as compared to the case that the cam plate 33 always rotates relative to the lock gear 27 as in the conventional case.

Since the carrier 34 rotates together with the spool 9 while the winding of the seat belt is carried out, the planetary gear 35 repeats the respective states shown in Fig. 13(a) through 18(a), thereby causing the intermittent relative rotation. Accordingly, the cam follower 23b gradually moves closer to the switching groove 36c.

As the belt winding amount reaches to a predetermined value, the cam follower 23b enters into the switching groove 36c. As the belt winding is further carried out, the cam follower 23b gradually moves toward the outer periphery of the cam plate 33 along the switching groove 36c. Therefore, the oscillation preventive member 23 is pivotally moved slowly in the counter-clockwise direction in Fig. 13(b) so as to get close to the oscillation preventing position.

As the belt winding amount gets close to the maximum, the cam follower 23b enters into the large-diameter groove 36b. Then, the oscillation preventive member 23 is set to the oscillation preventing position similarly to the state shown in Fig. 19(b). Further, as the maximum amount of the seat belt 4 is wound up, the belt winding operation by the seat belt retractor 3 is completed. Though the cam follower 23b is close to the end of the large-diameter groove 36b to some extent, the cam follower 23b is still located in the large-diameter groove 36b as shown in Fig. 19(b). Therefore, the oscillation preventive member 23 is held in the state set to the oscillation preventing position. Fig. 19(a) shows the position of the planetary gear 35 at the completion of the belt winding operation. However, the position of the planetary gear 35 at the completion of the belt winding operation is not limited to the position shown in Fig. 19(a) and may be set to any position relative to the first and second guide rails 39, 41.

At least when the maximum amount of the seat belt 4 is wound up in the aforementioned manner, the oscillation preventive member 23 is set to the oscillation preventing position so that the belt withdrawal sensor 11 is held at the non-operational position where the oscillation of the belt withdrawal sensor 11 is prevented. Therefore, the end lock due to the oscillation of the belt withdrawal sensor 11 which likely occurs at the completion of the belt winding operation by the seat belt retractor 3 is prevented.

On the other hand, in the second end lock preventive device 44, as the withdrawn seat belt 4 is wound onto the spool 9, the eccentric disk 52 is rotated by the rotation of the spool 9 in the belt winding direction, whereby the external teeth 51a of the control ring 51 sequentially mesh with the internal teeth 46a of the ring gear 46. Therefore, the speed of the control ring 51 is largely reduced so that the control ring 51 eccentrically rotates slowly in the reverse direction. By the eccentric rotation of the control ring 51, the stopper control disk 50 is rotated slowly in the reverse direction.

Then, the cam follower 49c moves from the arcuate retraction groove portion 55a or the linear groove portion 55b toward the arcuate protraction groove portion 55c. As substantially the maximum amount of the seat belt 4 is wound onto the spool 9, the cam follower 49c is located in the arcuate protraction groove portion 55c. At this point, the stopper portion 49b of the stopper 49 in the second end lock preventive device 44 is located at an outer-side position A outside the ratchet teeth 27a of the lock gear 27 as shown by solid lines in Fig. 11. As the maximum amount of the seat belt 4 is wound onto the spool 9, the belt winding operation is completed. At this point, the cam follower 49c is held to be located in the arcuate protraction groove portion 55c. Therefore, even when the actuator 21 of the vehicle sensor 10 is actuated when the maximum amount of the seat belt 4 is wound up, the engaging pawl 22 at the tip end of the actuator 21 comes in contact with the stopper portion 49b and is thus prevented from moving into the position where the engaging pawl 22 can be engaged with the ratchet teeth 27a of the lock gear 27. Accordingly, the outer-side position A of the stopper portion 49b is an engagement preventing position where the engaging pawl 22 of the vehicle sensor 10 is prevented from being engaged with the ratchet teeth 27a of the lock gear 27. Since the engaging pawl 22 is prevented by the stopper portion 49b from being engaged with the ratchet teeth 27a, the engaging pawl 22 of the actuator 21 is engaged with none of the ratchet teeth 27a of the lock gear 27. That is, when the seat belt 4 is maximally wound onto the spool, the end lock is prevented by the second end lock preventive device 44.

### State that the seat belt is withdrawn for the wearing by occupant

As the seat belt 4 is withdrawn for the wearing by the occupant from the state that the seat belt 4 is maximally wound by the seat belt retractor 3, the spool 9 rotates in a reverse direction from that in the case for winding the seat belt as mentioned above. Then, the torsion bar 13, the lock gear 27, the carrier 34, and the cam plate 33 rotate in reverse directions from those in the case for winding the seat belt. In addition, the planetary gear 35 revolves and rotates in reverse directions from those in the case for winding the seat belt. During this, the cam plate 33 performs the intermittent relative rotation relative to the lock gear 27 similarly to the case of belt winding (the rotational directions of the cam plate 33 and the lock gear 27 are reverse from those in the case for winding the seat belt). At least when the seat belt 4 is worn by the occupant, the cam follower 23b enters into the small-diameter groove 36a from the large-diameter groove 36b through the switching groove 36c so that the oscillation preventive member 23 is set to the oscillation allowing position as shown in Fig. 14(b). Therefore, when the seat belt 4 is worn by the occupant, the belt withdrawal sensor 11 is allowed to oscillate so as to exhibit its function.

On the other hand, in the second end lock preventive device 44, as the seat belt 4 is withdrawn, the eccentric disk 52 is rotated because of the rotation of the spool 9 in the withdrawing direction. The rotation of the eccentric disk 52 rotates the control ring 51 so that the external teeth 51a of the control ring 51 sequentially mesh with the internal teeth 46a of the ring gear 46. Therefore, the speed of the control ring 51 is largely reduced so that the control ring 51 eccentrically rotates slowly. By the eccentric rotation of the control ring 51, the stopper control disk 50 is rotated slowly.

Then, the cam follower 49c enters into the linear groove portion 55b from the arcuate protraction groove portion 55c of the cam groove 55, whereby the stopper 49 is rapidly pulled. Accordingly, the stopper portion 49b of the stopper 49 is located at the inner-side position B inside the root of the ratchet teeth 27a of the lock gear 27. Therefore, when the actuator 21 of the vehicle sensor 10 is actuated, the engaging pawl 22 at the tip end of the actuator 21 does not come in contact with the stopper portion 49b and is thus allowed to move to the position where the engaging pawl 22 can be engaged with the ratchet teeth 27a of the lock gear 27. That is, the engaging pawl 22 of the actuator 21 can be engaged with the ratchet teeth 27a of the lock gear 27, whereby the vehicle sensor 10 exhibits its ELR function.

In Fig. 11, a numeral 57 designates a switching arm for switching from the ELR function to the ALR function when the seat belt 4 is almost maximally withdrawn similarly to a conventionally known automatic locking retractor (ALR). By this switching arm 57, the automatic locking function is conducted. After the automatic locking function is finished, the maximum amount of the seat belt 4 is wound onto the spool. The actions of the first and second end lock preventive devices 43, 44 during this are the same as mentioned above.

According to the seat belt retractor 3 of this embodiment, in the first end lock preventive device 43, the oscillation preventive member 23 is set at the oscillation preventing position when the seat belt 4 is maximally wound so that the oscillation of the belt withdrawal sensor 11 is prevented by the oscillation preventive member 23 and the belt withdrawal sensor 11 is thus held at the inoperative position. Therefore, the end lock due to the belt withdrawal sensor 11 can be prevented.

During the winding operation of the seat belt 4, the cam plate 33 for controlling the oscillation preventive member 23 performs the intermittent relative rotation relative to the lock gear 27 which rotates together with the spool 9, thereby reducing the rotational amount of the cam plate 33 until the seat belt 4 is wound onto the spool 9 maximally. This arrangement shortens the length of the cam groove 36 to be formed in the cam plate 33 for controlling the oscillation preventive member 23 between the oscillation preventing position and the oscillation allowing position. Moreover, the cam plate 33 is made of a simple disk plate, thereby simplifying the structure of the cam plate 33. Therefore, since the space for forming the cam groove 36 can be reduced and the cam plate 33 has a simple structure, the cam plate 33 can be made in a compact size.

Since the planetary gear mechanism composed of the cam plate 33, the carrier 34, and the planetary gear 35 is used, a compact power transmitting mechanism for transmitting the rotation of the torsion bar 13 to the cam plate 33 is achieved.

Further, since the sub assembly 38 is formed by previously assembling the cam plate 33, the carrier 34, and the planetary gear 35 before assembling the retractor, the cam plate 33, the carrier 34, and the planetary gear 35 can be easily assembled to the torsion bar 13 with precisely positioning the internal gear 37 of the cam plate 33 and the planetary gear 35 relative to each other. Therefore, the external teeth 35a of the planetary gear 35 are precisely meshed with the internal teeth 37a of the internal gear 37 so as to make the behaviors of the planetary gear 35 and the cam plate 33 smooth as compared to, for example, a case that the internal gear 37 is disposed on the retainer 30 side.

In the second end lock preventive device 44, the stopper 49 is adapted to be movable in the radial direction of the lock gear 27 according to the rotation of the spool 9 between the engaging preventing position A where the vehicle sensor 10 allows the rotation of the lock gear 27 and the engagement allowing position B where the vehicle sensor 10 can prevent the lock gear 27 from rotating in the belt withdrawing direction. Therefore, the stopper 49 can be set to the engagement preventing position A by the spool 9 when the seat belt 4 is maximally wound, thereby preventing the end lock due to the vehicle sensor 10. In this manner, in the seat belt retractor 3 of this embodiment, the end lock due to either of the vehicle sensor 10 and the belt withdrawal sensor 11 can be prevented, thereby more effectively preventing the end lock which likely occurs when the seat belt 4 is maximally wound.

Furthermore, since the stopper 49 for the second end lock preventive device 44 is movable in the radial direction of the lock gear 27 between the engagement preventing position A and the engagement allowing position B, it is only required to set such that the trajectory of the stopper 49 includes the position where the engaging pawl 22 of the vehicle sensor 10 is engaged with the ratchet teeth 27a of the lock gear 27. Therefore, the trajectory of the stopper 49 can be reduced so as to require reduced space for movement. Moreover, since the stopper 49 is adapted to move simply linearly in the radial direction of the lock gear 27 so that the stopper 49 does not pass between the ratchet teeth 27a and the engaging pawl 22 while rotating in the rotational direction of the lock gear 27, the stopper 49 never interrupt the engaging pawl 22 in the rotational direction of the lock gear 27. Accordingly, the distance between the engaging pawl 22 and the ratchet teeth 27a may be the same as a conventional ELR, that is, not necessary to be changed. Therefore, the seat belt retractor 3 of this embodiment can be made in a compact size even with the second end lock preventive device 44.

Further, the distance between the engaging pawl 22 and the ratchet teeth 27a is equal to that of a conventional ELR which has no second end lock preventive device 44 for preventing the end lock due to the vehicle sensor 10 so that the moving distance of the engaging pawl 22 between the inoperative position and the operative position is not changed, thereby preventing the size of the vehicle sensor 10 from being increased like the conventional seat belt retractor. Furthermore, even with the second end lock preventive device 44, a conventional vehicle sensor can be used as the vehicle sensor 10 of the seat belt retractor 3 of this embodiment without any modification, thereby making the seat belt retractor 3 of this embodiment at low cost.

The end lock preventive action can be stably and smoothly conducted while the function of the vehicle sensor 10 is yet suitably exhibited, thereby improving the reliability of the seat belt retractor 3.

The stopper control disk 50 is rotated by the control ring 51 moved by the rotation of the spool 9 so that the operation of the stopper 49 is controlled by the cam groove 55 of the stopper control disk 50, thereby more stably preventing the end lock with simple structure.

On the other hand, according to the seat belt apparatus 1 of this embodiment, the end lock in the seat belt retractor 3 can be effectively prevented, thereby improving the operability of the seat belt 4 and enabling the smooth and stable wearing of the seat belt 4 by the occupant.

Though the first and second end lock preventive devices 43, 44 are both provided in the seat belt retractor 3 of the aforementioned embodiment, only the first end lock preventive device 43 for preventing the end lock due to the belt withdrawal sensor 11 may be provided.

The structure for achieving the intermittent relative rotation between the lock gear 27 and the cam plate 33 of the present invention is not limited to the aforementioned structure, various changes and modifications in design may be made.

The present invention is not limited to the seat belt retractor having the ELR function and the ALR function as mentioned above and may be applied to a seat belt retractor having only the ELR function.

### Industrial Applicability

The seat belt retractor and the seat belt apparatus of the present invention are suitably used as a seat belt retractor in which end lock likely occurs and which has at least a belt withdrawal sensor for preventing the withdrawal of a seat belt which is actuated when the seat belt is rapidly withdrawn, and a seat belt apparatus which comprises such a seat belt retractor and restrains an occupant by the seat belt withdrawn from the seat belt retractor.

## Claims

1. A seat belt retractor comprising: a spool (9) onto which a seat belt (4) is wound; a locking mechanism (12) which allows the rotation of said spool (9) when it is inoperative and prevents the rotation of said spool (9) in the belt withdrawing direction when it is operative; a belt withdrawal sensor (11) which is actuated when said seat belt (4) is rapidly withdrawn at a speed exceeding a predetermined speed higher than the speed for normal operation; and a lock actuating means which actuates said locking mechanism (12) according to the actuation of said belt withdrawal sensor (11), wherein
said lock actuating means comprises at least a lock gear (27) which is disposed such that said lock gear (27) rotates together with said spool (9) when it is inoperative and said lock gear (27) rotates relative to said spool (9) when it is operative and actuates said locking mechanism (12) by relative rotation of said lock gear (27) relative to said spool (9) when it is operative, wherein
said belt withdrawal sensor (11) is disposed on said lock gear (27) such that said belt withdrawal sensor (11) can oscillate between an inoperative position where the lock gear (27) is allowed to rotate both in the belt winding direction and the belt withdrawing direction and an operative position where the lock gear (27) is prevented from rotating at least in the belt withdrawing direction, wherein
said lock gear (27) is provided with an oscillation preventive member (23) for preventing the oscillation of said belt withdrawal sensor (11) such that said oscillation preventive member (23) moves between an oscillation preventing position where said belt withdrawal sensor (11) is held at said inoperative position to prevent the oscillation of said belt withdrawal sensor (11) at least when said seat belt (4) is maximally wound and an oscillation allowing position where the oscillation of said belt withdrawal sensor (11) is allowed when said seat belt (4) is withdrawn by a predetermined amount or more and is also provided with an oscillation preventive member control means (32) for controlling the movement of said oscillation preventive member (23), and wherein
said oscillation preventive member control means (32) comprises a movement control member (33) which rotates according to the rotation of said spool (9) to control the movement of said oscillation preventive member (23) and an intermittent relative rotation means (34, 35, 37, 39, 41) which makes said movement control member (33) to intermittently rotate relative to said lock gear (27).

2. A seat belt retractor as claimed in claim 1, wherein said movement control member is a cam plate (33) which has a cam groove (36) and wherein said oscillation preventive member (23) is provided with a cam follower (23b) which is inserted into and guided by said cam groove (36).

3. A seat belt retractor as claimed in claim 2, wherein said intermittent relative rotation means comprises a carrier (34) which rotates together with said spool (9), a planetary gear (35) which is rotatably supported by said carrier (34), an internal gear (37) which is disposed on said cam plate (33) and with which said planetary gear (35) is meshed, and a planetary gear control means (35b₁₋₄, 39c, 40, 41b-d) which alternately and repeatedly sets said planetary gear (35) to a state that said planetary gear (35) only revolves and to a state that said planetary gear (35) revolves and also rotates on its axis.

4. A seat belt retractor as claimed in any one of claims 1 through 3, further comprising a vehicle sensor (10) which normally allows the rotation of said lock gear (27) and prevents the rotation of said lock gear (27) in the belt withdrawing direction in the event of an emergency when a deceleration larger than the normal one acts on a vehicle, wherein
a stopper (49) is provided in such a manner that said stopper (23c) is movable in the radial direction of said lock gear (27) between the engagement preventing position (A) where said vehicle sensor (10) allows the rotation of said lock gear (27) and an engagement allowing position (B) where said vehicle sensor (10) is able to prevent the rotation of said lock gear (27) in the belt winding direction, and wherein
at least when said seat belt (4) is maximally wound onto said spool (9), said stopper (49) is set to said engagement preventing position (A).

5. A seat belt apparatus comprising at least: a seat belt (4) to be worn by an occupant; a seat belt retractor (3) which wind up said seat belt (4) while allowing the withdrawal of said seat belt (4) and is actuated in the event of an emergency to prevent the withdrawal of said seat belt (4); a tongue (6) slidably supported by said seat belt (4) withdrawn from said seat belt retractor (3); and a buckle (7) which is attached to a vehicle body or a vehicle seat (2) and to which said tongue (6) can be detachably latched,
wherein said seat belt retractor is a seat belt retractor (3) as claimed in any one of claims 1 through 4.
